# FASCICULE DE BREVET EUROPEEN

(11) **EP 3 006 925 B1**
(45) Date de publication et mention de la délivrance du brevet: **15.08.2018**
(21) Numéro de dépôt: 15188456.6
(22) Date de dépôt: 06.10.2015
(51) Int. Cl.: G01N 23/203, G01N 23/205, G01N 23/20

(54) **PROCEDE DE DETECTION DE DISCONTINUITES DANS UN ECHANTILLON PAR ANALYSE D'IMAGES DE DIFFRACTION**
VERFAHREN ZUR DETEKTION VON DISKONTINUITÄTEN IN EINER PROBE DURCH ANALYSE VON BEUGUNGSBILDERN
METHOD FOR DETECTING DISCONTINUITIES IN A SAMPLE BY DIFFRACTION IMAGE ANALYSIS

(30) Priorité: 08.10.2014 FR 1459650
(43) Date de publication de la demande: 13.04.2016
(73) Titulaire: COMMISSARIAT À L'ÉNERGIE ATOMIQUE ET AUX ÉNERGIES ALTERNATIVES, 75015 Paris (FR); Université Joseph Fourier - Grenoble, 38041 Grenoble Cedex 9 (FR)
(72) Inventeur: VIGOUROUX, Mathieu, 38000 GRENOBLE (FR); BERNIER, Nicolas, 38700 LA TRONCHE (FR); SCARAZZINI, Riccardo, 38000 GRENOBLE (FR)
(74) Mandataire: Cabinet Camus Lebkiri

(56) Documents cités:
- EP-A1- 1 798 544
- EP-A1- 2 667 184
- US-A1- 2004 011 958
- US-A1- 2010 158 392
- US-A1- 2012 140 889
- GREG JOHNSON ET AL: "X-ray diffraction contrast tomography: a novel technique for three-dimensional grain mapping of polycrystals. II. The combined case", JOURNAL OF APPLIED CRYSTALLOGRAPHY, vol. 41, no. 2, 8 mars 2008 (2008-03-08), pages 310-318, XP055117130, ISSN: 0021-8898, DOI: 10.1107/S0021889808001726

## Description

### DOMAINE TECHNIQUE

Le domaine de l'invention est celui de la caractérisation de la structure et des déformations dans des matériaux multicristallins par analyse d'images de diffraction. Plus précisément, la présente invention concerne un procédé de détection de discontinuités dans un échantillon par analyse d'images de diffraction.

### ETAT DE LA TECHNIQUE ANTERIEUR

La diffraction par rayons X, électrons ou neutrons est une technique employée pour caractériser des cristaux. Cette technique consiste à illuminer l'échantillon par un faisceau de particules choisi de façon à être diffracté par l'échantillon. On mesure ensuite grâce à un détecteur 2D l'intensité diffractée par l'échantillon. On obtient ainsi une image comprenant de nombreuses taches de diffraction représentant l'intensité diffractée par l"échantillon. Cette image est appelée « image de diffraction » ou « cliché de Laue ». La répartition des tâches de diffraction permet de caractériser la structure de l'échantillon, notamment en indexant les tâches de diffraction obtenues et en étudiant leur répartition ainsi que la distance entre les tâches.

Cette indexation des tâches est possible dans le cas d'un échantillon monocristallin ou comportant peu de cristaux, c'est-à-dire entre 1 et 3 types de cristaux dans le volume sondé. Toutefois, dans le cas d'un échantillon réellement polycristallin, une dizaine ou une vingtaine de grains viennent diffracter simultanément, ce qui rend l'indexation impossible car il n'y a pas de solution unique mais plusieurs solutions en raison du grand nombre de tâches, allant parfois jusqu'à plusieurs centaines.

Pour remédier à ce problème et pouvoir caractériser tout type d'échantillons, y compris les échantillons polycristallins, le document EP2439520 propose de réaliser une série de clichés de diffraction en déplaçant le faisceau de diffraction selon une première direction, puis de concaténer la série d'image obtenue pour obtenir un volume en trois dimensions. Le procédé propose ensuite de calculer les centres de masse de chacune des particules pour chacun desdits grains, afin de déterminer les coordonnées relatives auxdites particules, dans ledit plan et selon la troisième direction puis de déterminer l'ensemble des coordonnées dans ledit premier plan selon lesdites première et seconde directions à partir des positions desdits centres de masse, pour former des clichés élémentaires de Laue relatifs à chacun desdits grains. Enfin, le procédé de ce document propose d'indexer les clichés élémentaires de Laue relatifs à chacun desdits grains de manière à définir l'orientation et la déformation élastique déviatorique de la maille cristalline desdits grains.

Toutefois, ce procédé manque de robustesse pour observer des échantillons dont la composition n'est pas connue.

US 2004/011958 divulgue aussi un procédé de détection de discontinuités dans un échantillon comportant l'acquisition d'une série d'images de diffraction de la surface d'un échantillon.

### EXPOSE DE L'INVENTION

L'invention vise à remédier aux inconvénients de l'état de la technique en proposant un procédé de caractérisation de la structure et des déformations dans un matériau qui soit simple et efficace pour tout type de matériaux cristallins, y compris les matériaux polycristallins.

Pour ce faire, l'invention concerne un procédé de détection de discontinuités dans un échantillon, l'échantillon comportant une surface s'étendant suivant un plan de référence (X, Y), le procédé comportant les étapes suivantes :
- (a) acquisition d'une série d'images de diffraction de la surface de l'échantillon, chaque image de diffraction étant réalisée par illumination de la surface de l'échantillon avec un faisceau de particules apte à être diffracté par la surface de l'échantillon la série d'images de diffraction étant réalisée en déplaçant le faisceau de particules relativement à la surface de l'échantillon suivant une direction X et suivant une direction Y, chaque image de diffraction étant identifiée par les coordonnées (x, y) du faisceau de particules au moment de l'acquisition de ladite image de diffraction ;
- (b) pour chaque image de diffraction, détermination d'une quantité de variations d'intensité totale entre cette image de diffraction et chacune des images de diffraction qui sont adjacentes à cette image de diffraction ;
- (c) pour chaque image de diffraction, comparaison de la quantité de variations d'intensité totale à une quantité seuil;

Pour chaque image de diffraction, si la quantité de variations d'intensité totale est supérieure à la quantité seuil, on considère qu'il y a une discontinuité au niveau de l'image de diffraction correspondante; si la quantité de variation d'intensité totale est inférieure à la quantité seuil, on considère qu'il n'y a pas de discontinuité au niveau de l'image de diffraction correspondante.

Le procédé propose donc de déplacer le faisceau de particules par rapport à la surface de l'échantillon suivant deux directions X et Y au contraire des procédés de l'art antérieur, dans lesquels le faisceau de particules n'était déplacé relativement à la surface de l'échantillon que dans une direction. Le fait de déplacer le faisceau de particules relativement à la surface de l'échantillon suivant deux directions permet d'obtenir une observation de l'échantillon plus précise et plus détaillée puisque l'on observe les discontinuités dans le matériau qui surveillent suivant deux directions au lieu de les observer selon seulement une direction. On obtient alors une série d'images de diffraction qui peuvent ensuite être concaténées dans un volume en « quatre dimensions » au contraire des procédés de l'art antérieur dans lesquels la série d'image ne pouvaient être concaténée que dans un volume en trois dimensions. Les images de diffraction sont ensuite comparées et leurs différences en termes d'intensité sont détectées et quantifiées. Plus précisément, le procédé propose de détecter les variations d'intensité entre une image et les images qui l'entourent et de quantifier les variations d'intensité entre ces images. Lorsqu'une image de diffraction présente de grandes variations d'intensité par rapport aux images de diffraction qui l'entoure, on en déduit que la zone du matériau qu'elle couvre contient des discontinuités. Au contraire, lorsqu'une image de diffraction ne présente pas de grandes variations d'intensité par rapport aux images qui l'entourent, on en déduit que la zone qu'elle couvre ne contient pas de discontinuités. Les discontinuités détectées par ce procédé sont typiquement les bords de grains. Une fois que les discontinuités du matériau sont détectées, on connait également la position et la taille des zones homogènes du matériau. On peut alors effectuer des analyses complémentaires dans chaque zone homogène, notamment par diffraction. Il est alors simple d'indexer les tâches de diffraction obtenues puisque l'analyse peut être faite dans une zone monocristalline. Le procédé est donc particulièrement avantageux puisqu'il permet de segmenter le matériau en zones monocristallines dans lesquelles des analyses complémentaires peuvent être effectuées. En outre, le procédé permet de s'affranchir du bruit puisque le bruit se retrouvera généralement dans toutes les images simultanément ou de manière isolée dans quelques subpixels (i, j), tandis que les différences d'intensité significatives entre deux images de diffraction représenteront réellement des discontinuités dans le matériau.

Les discontinuités détectées peuvent être des joints de grains, des différences de matériaux, des différences de cristallographie...

Le procédé selon l'invention peut également présenter une ou plusieurs des caractéristiques ci-après prises indépendamment ou selon toutes les combinaisons techniques possibles.

Plus le pas entre deux enregistrements d'images de diffraction adjacentes est faible, plus la détection de discontinuités sera précise. Le pas choisi entre deux enregistrements d'image de diffraction dépend de préférence du matériau analysé. Ainsi, on choisit de préférence un pas de l'ordre d'un dixième de la taille des grains attendus dans l'échantillon analysé.

Avantageusement, la direction X et la direction Y sont parallèles à la surface de l'échantillon.

Avantageusement, la direction X et la direction Y sont perpendiculaires entre elles. Le faisceau de particules est émis suivant une direction sécante à la surface de l'échantillon.

correspondante.

Avantageusement, le procédé comporte en outre une étape de détection de zones continues entre les discontinuités détectées dans le matériau.

Le procédé peut ensuite comporter une étape d'analyse complémentaire de chaque zone continue détectée. En effet, une fois que les différentes zones qui constituent l'échantillon sont identifiées, on peut effectuer des analyses plus détaillées de ces zones, et notamment par diffraction. Il est alors facile d'indexer les tâches de diffraction obtenues.

Avantageusement, l'étape (b) comporte les sous-étapes suivantes :
- (d) segmentation de chaque image de diffraction en secteurs, chaque secteur étant identifié par des coordonnées (i, j) indiquant sa position dans l'image de diffraction ;
- (e) pour chaque image de diffraction, détermination de l'intensité de l'image de diffraction dans chacun des secteurs de l'image de diffraction ;
- (f) pour chaque secteur (i, j), détermination d'une quantité de variation d'intensité entre ce secteur et chacun des secteurs ayant les mêmes coordonnées (i, j) que ledit secteur et appartenant à des images de diffraction adjacentes à l'image de diffraction à laquelle appartient ledit secteur;
- (g) pour chaque image de diffraction, détermination de la quantité de variation d'intensité totale en faisant la somme des quantités de variations d'intensité déterminées lors de l'étape (f) pour chacun des secteurs (i, j) appartenant à cette image de diffraction.

Ce mode de réalisation permet de déterminer précisément les variations d'intensité entre une image de diffraction et les images de diffraction qui l'entourent. Plus le nombre de secteurs par image de diffraction est grand, plus le procédé est précis. Selon un mode de réalisation préférentiel, le nombre de secteurs par image de diffraction correspond au nombre de pixels par image de diffraction. Dans ce cas, le nombre de secteurs par image de diffraction dépend du détecteur choisi pour enregistrer les images de diffraction.

Avantageusement, le procédé comporte en outre une étape de formation d'une représentation de la surface de l'échantillon, la représentation étant formée par un ensemble de pixels, chaque pixel correspondant à une image de diffraction, chaque pixel ayant une intensité proportionnelle à la quantité de variation d'intensité totale déterminée pour cette image de diffraction. Chaque pixel a donc une intensité proportionnelle à la somme des quantités de variations d'intensité dans chaque secteur (i, j) de l'image de diffraction par rapport aux images de diffraction adjacentes. Par conséquent chaque pixel a donc une intensité proportionnelle à une mesure des variations d'intensité entre l'image de diffraction à laquelle il correspond et les images adjacentes. Une telle représentation permet de mieux faire apparaître les discontinuités dans l'échantillon et donc de mieux faire apparaître les différentes zones qui composent l'échantillon. Plus le nombre d'images de diffraction enregistrées pour la surface de l'échantillon est grand, plus cette représentation est précise.

Avantageusement, le faisceau de particules est déplacé suivant la direction X et suivant la direction Y d'un pas sensiblement égal à un nombre dix fois inférieur à la taille caractéristiques des plus petites zones continues que l'on souhaite observer, ce qui permet d'avoir une bonne résolution.

Selon différents modes de réalisation, le faisceau de particules peut être :
- Un faisceau de rayons X ;
- Un faisceau électronique ;
- Un faisceau neutronique.

Un deuxième aspect de l'invention, qui peut être combiné avec le premier, concerne un procédé de réalisation d'un filtre anti-bruit comportant les étapes suivantes :
- (a) acquisition d'une série d'images de diffraction de la surface de l'échantillon, chaque image de diffraction étant réalisée par illumination de la surface de l'échantillon avec un faisceau de particules apte à être diffracté par la surface de l'échantillon la série d'images de diffraction étant réalisée en déplaçant le faisceau de particules relativement à la surface de l'échantillon suivant une direction X et suivant une direction Y, chaque image de diffraction étant identifiée par les coordonnées (x, y) du faisceau de particules au moment de l'acquisition de ladite image de diffraction ;
- segmentation de chaque image de diffraction en secteurs, chaque secteur étant identifié par des coordonnées (i, j) indiquant sa position dans l'image de diffraction ;
- pour chaque secteur (i, j), détermination de la variation d'intensité dans ce secteur (i, j), sur l'ensemble des images de diffraction.

Ce procédé permet de détecter les secteurs des images de diffraction qui sont utiles pour détecter les discontinuités dans le matériau. En effet, les secteurs qui subissent beaucoup de variation sont considérés comme des secteurs utiles car représentatifs des discontinuités du matériau tandis que les autres secteurs sont considérés comme représentant des bruits parasites. On peut ensuite ne garder que ces secteurs utiles dans les images de diffraction, tandis que les autres secteurs peuvent être négligés. Plus précisément, on peut donner une importance aux secteurs des images de diffraction qui est proportionnelle aux variations d'intensité constatées sur l'ensemble des images.

Avantageusement, le procédé comporte une étape de formation d'un filtre anti-bruit, le filtre anti-bruit comportant une composante associée à chaque secteur (i, j), chaque composante ayant comme valeur la variation d'intensité dans ce secteur, sur l'ensemble des images de diffraction.

Selon un mode de réalisation préférentiel, le filtre anti-bruit comporte autant de composantes que la représentation comporte de pixels, chaque composante du filtre anti-bruit étant associée à un pixel de la représentation et inversement, le procédé comportant en outre une étape de multiplication de la valeur de chaque pixel par la valeur de la composante correspondante. Cette étape permet de donner de l'importance aux zones utiles et de diminuer l'importance des zones de l'image qui correspondent à des bruits parasites.

### BREVES DESCRIPTION DES FIGURES

D'autres caractéristiques et avantages de l'invention ressortiront à la lecture de la description détaillée qui suit, en référence aux figures annexées, qui illustrent :
- La figure 1, une représentation schématique d'un dispositif de diffraction utilisé pour mettre en oeuvre un procédé selon un mode de réalisation de l'invention ;
- La figure 2, une représentation schématique vue du dessus de la surface d'un échantillon sur laquelle on met en oeuvre un procédé selon un mode de réalisation de l'invention ;
- La figure 3, une vue agrandie d'une partie d'une partie de la surface représentée sur la figure 2 ;
- La figure 4, une représentation schématique d'une série d'images de diffraction enregistrées de la surface représentée sur la figure 2 dans le cadre d'un procédé selon un mode de réalisation de l'invention ;
- La figure 5, une vue agrandie de quatre des images de diffraction de la figure 4;
- La figure 6, une autre représentation schématique des images de diffraction enregistrées dans le cadre d'un procédé selon un mode de réalisation de l'invention ;
- La figure 7, une représentation schématique des images de diffraction enregistrées dans le cadre d'un procédé selon un mode de réalisation de l'invention lors d'une étape ultérieure du procédé ;
- La figure 8, une vue agrandie de quatre images de diffraction de la figure 7 ;
- La figure 9, une représentation schématique d'un filtre anti-bruit obtenu par un procédé selon un mode de réalisation de l'invention.

### DESCRIPTION DETAILLEE D'AU MOINS UN MODE DE REALISATION

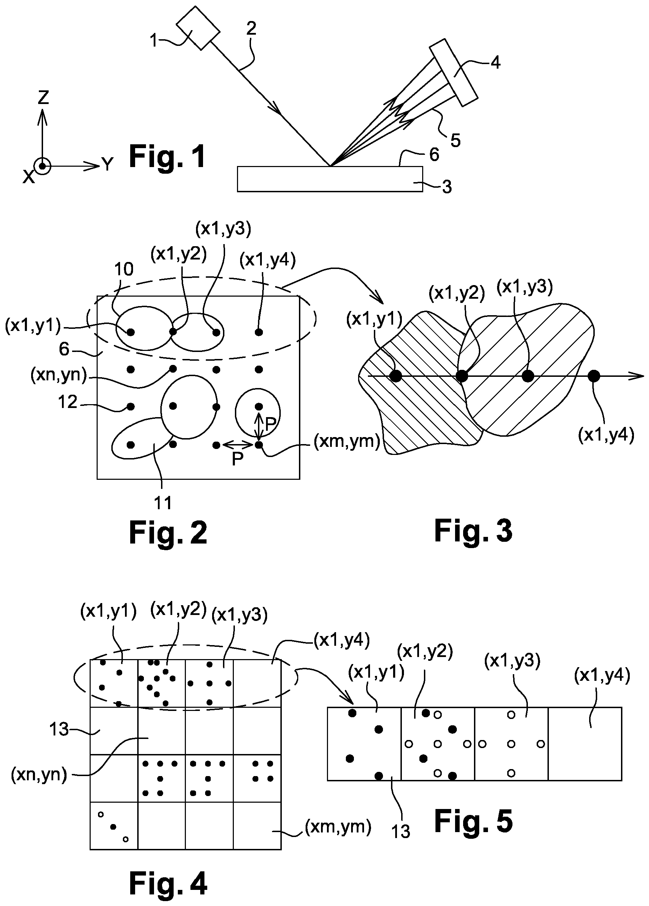

La figure 1 représente un dispositif de diffraction permettant de mettre en oeuvre un procédé selon un mode de réalisation de l'invention.

Ce dispositif de diffraction comporte des moyens d'émission 1 aptes à émettre un faisceau de particules 2. Le faisceau de particules 2 est choisi de façon à être diffracté par l'échantillon 3 à analyser. En fonction de l'échantillon à analyser, ce faisceau de particules peut être un faisceau de rayons X, de neutrons ou d'électrons.

Le dispositif de diffraction comporte également des moyens de réception 4 aptes à enregistrer des images de diffraction représentant l'intensité 5 émise par l'échantillon en réponse au faisceau de particules 2. Ces moyens de réception 4 peuvent par exemple comporter une caméra CCD.

L'échantillon 3 présente une surface 6 qui s'étend parallèlement à un plan de référence (X, Y). Le faisceau de particules 2 s'étend suivant une direction sécante au plan de référence. L'échantillon comporte des discontinuités 10 qui sont ici formées par des joints de grains. Ces discontinuités 10 délimitent des zones continues formées par des grains 11.

Un procédé selon un mode de réalisation de l'invention et utilisant le dispositif de la figure 1 va maintenant être décrit en référence aux figures 1 à 10. Ce procédé va permettre de localiser les grains à la surface de l'échantillon.

Pour cela, le procédé comporte une première étape d'acquisition d'une série d'images de diffraction de la surface 6 de l'échantillon. La série d'images de diffraction est réalisée en illuminant successivement différents points de la surface 6 de l'échantillon avec le faisceau de particules 2. La figure 2 représente schématiquement la surface 6 de l'échantillon, sur laquelle on a représenté les points d'impact 12 successifs du faisceau de particules qui ont été choisis pour réaliser la série d'image de diffraction. Ces points d'impacts 12 sont désignés par leurs coordonnées (x₁, y₁) à (xₙ, yₙ). Entre deux points d'impact successifs, le faisceau de particules 2 est déplacé d'un pas P donné relativement à la surface de l'échantillon suivant une direction X ou suivant une direction Y. Le pas P suivant lequel le faisceau est déplacé dépend du matériau étudié. Il est de préférence choisi de façon à ce qu'environ 10 images de diffraction soient enregistrées par grain du matériau. Ainsi, par exemple, si l'échantillon étudié comporte des grains de 10 nm minimum, le pas qui permet la meilleure résolution est sensiblement égal à 1 nm. Le faisceau de particules est déplacé de façon à couvrir l'ensemble de la surface de l'échantillon.

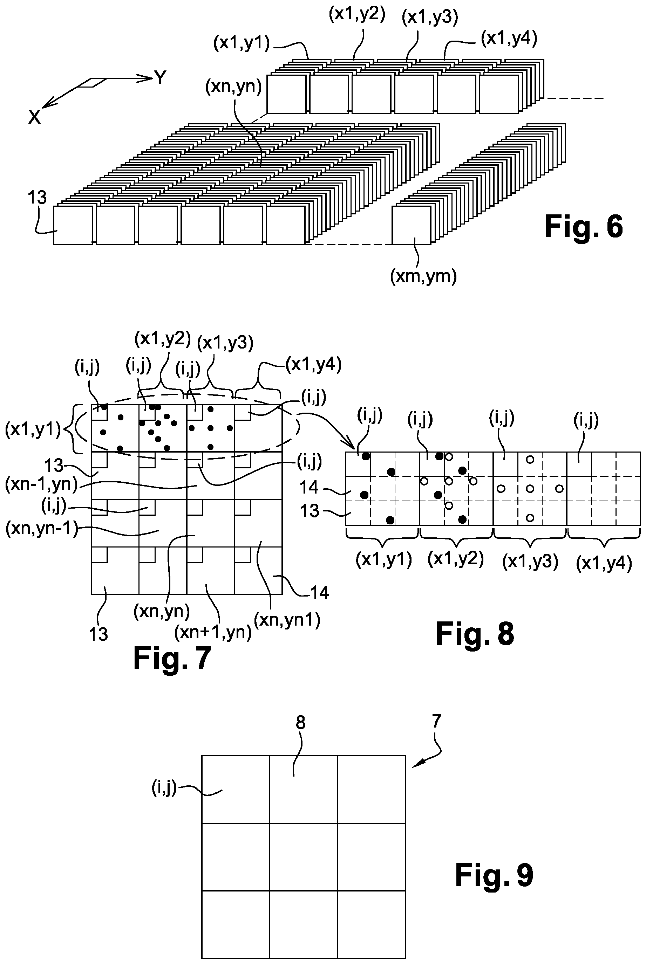

On enregistre ainsi une série d'images de diffraction 13 à l'aide des moyens de réception. La figure 4 représente schématique la série d'images de diffraction 13 enregistrées en réponse au déplacement du faisceau de particules 2 déplacé sur la surface 6 de l'échantillon. Sur la figure 4, chaque image de diffraction est identifiée par les coordonnées (xₙ, yₙ) du point d'impact du faisceau de particules sur la surface de l'échantillon. La figure 6 est une autre vue représentant les images de diffraction prises de la surface de l'échantillon.

Le procédé comporte ensuite une étape (b) de détermination, pour chaque image de diffraction, d'une quantité de variations d'intensité totale entre cette image de diffraction et chacune des images de diffraction qui sont adjacentes à cette image de diffraction. On dit que deux images de diffraction sont adjacentes si elles correspondent à des points d'impact adjacents. Par conséquent, lors de l'étape (b), on détermine la quantité de variations d'intensité totale entre une image de diffraction (xₙ, yₙ) et chacune des images de diffraction qui lui sont adjacentes : (xₙ, yₙ₊₁), (xn+1, Yn), (xₙ₋₁, yₙ) et (xₙ, yₙ₋₁).

Pour cela, chaque image de diffraction est de préférence segmentée en secteurs 14 comme représenté schématiquement sur les figures 7 et 8. Chaque secteur est identifié par des coordonnées (i, j) indiquant sa position dans l'image de diffraction. Sur les figures, chaque image de diffraction est segmentée en 9 secteurs. Toutefois, ce n'est qu'une représentation schématique et chaque image est de préférence segmentée en un nombre supérieur de secteurs. Plus le nombre de secteurs par image est grand, plus le procédé sera précis, mais plus il sera lourd à mettre en oeuvre. Selon un mode de réalisation préférentiel, le nombre de secteurs par image est égal au nombre d'image de diffraction de la série d'images de diffraction. Par ailleurs, pour que le procédé soit le plus précis possible, le nombre de secteurs par image de diffraction correspond de préférence au nombre de pixels par image de diffraction.

Le procédé comporte ensuite une étape (e) de détermination, pour chaque image de diffraction, de l'intensité de l'image de diffraction dans chacun des secteurs de l'image de diffraction.

Le procédé comporte ensuite une étape (f) de détermination, pour chaque secteur (i, j), d'une quantité de variation d'intensité entre ce secteur (i, j) et chacun des secteurs ayant les mêmes coordonnées (i, j) que ledit secteur et appartenant à des images de diffraction adjacentes à l'image de diffraction à laquelle appartient ledit secteur. Ainsi, par exemple pour un secteur (i, j) de l'image (xₙ, yₙ), on compare l'intensité de l'image (xₙ, yₙ) dans ce secteur (i, j) avec :
- l'intensité dans le secteur de mêmes coordonnées (i, j) de l'image (xₙ₋₁, yₙ) et on en déduit une quantité de variation d'intensité entre ces deux secteurs;
- l'intensité dans le secteur de mêmes coordonnées (i, j) de l'image (xₙ₊₁, yₙ) et on en déduit une quantité de variation d'intensité entre ces deux secteurs;
- l'intensité dans le secteur de mêmes coordonnées (i, j) de l'image (xₙ, yₙ₋₁) et on en déduit une quantité de variation d'intensité entre ces deux secteurs;
- l'intensité dans le secteur de mêmes coordonnées (i, j) de l'image (xₙ, yₙ₊₁) et on en déduit une quantité de variation d'intensité entre ces deux secteurs.

Le procédé comporte ensuite une étape (g) de détermination, pour chaque image de diffraction, de la quantité de variation d'intensité totale entre cette image de diffraction et l'ensemble des images qui lui sont adjacentes. Cette quantité de variation d'intensité totale est de préférence déterminée en faisant la somme des quantités de variations d'intensité déterminées lors de l'étape (f) pour chacun des secteurs (i, j) appartenant à cette image de diffraction.

Le procédé comporte une étape (c) de comparaison, pour chaque image de diffraction, de la quantité de variations d'intensité totale à une quantité seuil. En effet, on considère que si la quantité de variations d'intensité totale pour une image est supérieure à la quantité seuil, cette image de diffraction correspond à une zone de l'échantillon contenant des discontinuités. Au contraire, si la quantité de variations d'intensité totale pour une image est inférieure à la quantité seuil, cette image de diffraction correspond à une zone de l'échantillon ne contenant pas de discontinuités.

Le procédé permet donc de détecter dans l'échantillon les zones de discontinuité et donc par déduction entre ces discontinuités, il permet de détecter les zones homogènes, c'est-à-dire les grains 11 en surface de l'échantillon.

Le procédé est particulièrement avantageux car il permet de délimiter les zones homogènes de l'échantillon de manière précise et simple.

Une fois que l'on a identifié les zones homogènes de l'échantillon, on peut effectuer des analyses complémentaires dans chaque zone de l'échantillon.

Le procédé peut également comporter une étape (h) de formation d'une représentation de la surface de l'échantillon, la représentation étant formée par un ensemble de pixels, chaque pixel correspondant à une image de diffraction, chaque pixel ayant une intensité proportionnelle à la quantité de variation d'intensité totale déterminée pour cette image de diffraction. Une telle représentation permet de faire ressortir les discontinuités à la surface de l'échantillon, et donc également les zones homogènes à la surface de l'échantillon, en s'affranchissant du bruit.

Par ailleurs, afin d'améliorer la précision du procédé, en s'affranchissant des bruits parasites qui peuvent être contenus dans les images de diffraction, un deuxième aspect de l'invention concerne la réalisation d'un filtre anti-bruit.

Pour cela, une fois que la série d'images de diffraction est enregistrée, et que chaque chaque image de la série est segmentée en secteurs comme décrit précédemment, le procédé comporte une étape de détermination, pour chaque secteur de diffraction, d'une deuxième quantité représentant la variation d'intensité dans ce secteur (i, j), sur l'ensemble des images de diffraction. Ainsi, pour un secteur de coordonnées (i, j) données, on va déterminer la quantité de variation d'intensité qui a eu lieu dans ce secteur sur l'ensemble des images de diffraction.

On peut ensuite créer un filtre anti-bruit 7 représenté schématiquement sur la figure 9 qui comporte autant de composantes 8 que chaque image de diffraction comporte de secteurs. Chaque composante du filtre anti-bruit correspond à un secteur de coordonnées (i, j). Chaque composante a pour valeur la quantité de variation d'intensité qui a eu lieu dans le secteur correspondant sur l'ensemble des images de diffraction. Ce filtre anti-bruit permet de détecter les secteurs dans lesquels il y a eu beaucoup de variations et qui ont donc permis de détecter les discontinuités, et les secteurs dans lesquels il y a peu eu de variations et qui ont donc peu contribué à détecter les discontinuités. En outre, ce filtre anti-bruit permet de traiter la représentation de la surface de diffraction pour s'affranchir du bruit contenu dans cette représentation. Pour cela, le nombre de secteurs par image est de préférence égal au nombre d'image de diffraction de la série d'images de diffraction de sorte que la représentation comporte autant de pixels que le filtre anti-bruit comporte de composantes. On associe alors à chaque pixel de la représentation une composante du filtre anti-bruit (et inversement) puis on multiplie la valeur de chaque pixel de la représentation par la valeur de la composante correspondante du filtre anti-bruit. On obtient ainsi une représentation améliorée de la surface de l'échantillon dans lequel le bruit parasite est diminué.

## Revendications

1. Procédé de détection de discontinuités dans un échantillon (3), l'échantillon (3) comportant une surface (6) s'étendant suivant un plan de référence (X, Y), le procédé comportant les étapes suivantes :
∘ (a) acquisition d'une série d'images de diffraction de la surface (6) de l'échantillon (3), chaque image de diffraction étant réalisée par illumination de la surface de l'échantillon avec un faisceau de particules (2) apte à être diffracté par la surface de l'échantillon, la série d'images de diffraction étant réalisée en déplaçant le faisceau de particules relativement à la surface de l'échantillon suivant une direction X et suivant une direction Y, chaque image de diffraction étant identifiée par les coordonnées (xₙ, yₙ) du faisceau de particules au moment de l'acquisition de ladite image de diffraction ;
∘ (b) pour chaque image de diffraction, détermination d'une quantité de variations d'intensité totale entre cette image de diffraction et chacune des images de diffraction qui sont adjacentes à cette image de diffraction ;
et **caractérisé en outre en ce qu'**il comporte les étapes suivantes:
∘ (c) pour chaque image de diffraction, comparaison de la quantité de variations d'intensité totale à une quantité seuil ;
∘ Pour chaque image de diffraction :
▪ si la quantité de variations d'intensité totale est supérieure à la quantité seuil, on considère qu'il y a une discontinuité au niveau de l'image de diffraction correspondante ;
▪ si la quantité de variation d'intensité totale est inférieure à la quantité seuil, on considère qu'il n'y a pas de discontinuité au niveau de l'image de diffraction correspondante.

2. Procédé selon la revendication précédente, dans laquelle l'étape (b) comporte les sous-étapes suivantes :
∘ (d) segmentation de chaque image de diffraction en secteurs, chaque secteur étant identifié par des coordonnées (i, j) indiquant sa position dans l'image de diffraction ;
∘ (e) pour chaque image de diffraction, détermination de l'intensité de l'image de diffraction dans chacun des secteurs de l'image de diffraction ;
∘ (f) pour chaque secteur (i, j), détermination d'une quantité de variation d'intensité entre ce secteur et chacun des secteurs ayant les mêmes coordonnées (i, j) que ledit secteur et appartenant à des images de diffraction adjacentes à l'image de diffraction à laquelle appartient ledit secteur;
∘ (g) pour chaque image de diffraction, détermination de la quantité de variation d'intensité totale en faisant la somme des quantités de variations d'intensité déterminées lors de l'étape (f) pour chacun des secteurs (i, j) appartenant à cette image de diffraction.

3. Procédé selon l'une des revendications précédentes, comportant en outre une étape (h) de formation d'une représentation de la surface de l'échantillon, la représentation étant formée par un ensemble de pixels, chaque pixel correspondant à une image de diffraction, chaque pixel ayant une intensité proportionnelle à la quantité de variation d'intensité totale déterminée pour cette image de diffraction.

4. Procédé selon l'une des revendications précédentes, comportant les étapes suivantes :
∘ segmentation de chaque image de diffraction en secteurs, chaque secteur étant identifié par des coordonnées (i, j) indiquant sa position dans l'image de diffraction ;
∘ pour chaque secteur (i, j), détermination d'une deuxième quantité représentant la variation d'intensité dans ce secteur (i, j), sur l'ensemble des images de diffraction.

5. Procédé selon la revendication précédente, comportant en outre une étape de formation d'un filtre anti-bruit (7), le filtre anti-bruit (7) comportant une composante associée à chaque secteur (i, j), chaque composante ayant comme valeur la variation d'intensité dans ce secteur, sur l'ensemble des images de diffraction.

6. Procédé selon les revendications 3 et 5, dans lequel le filtre anti-bruit (7) comporte autant de composantes (8) que la représentation comporte de pixels, chaque composante du filtre anti-bruit (8) étant associée à un pixel de la représentation, le procédé comportant en outre une étape de multiplication de la valeur de chaque pixel par la valeur de la composante correspondante.

7. Procédé selon l'une des revendications précédentes, comportant une étape de détection de zones continues entre les discontinuités détectées dans le matériau.

8. Procédé selon l'une des revendications précédentes, dans lequel la direction X et la direction Y sont perpendiculaires entre elles.

## Patentansprüche

1. Detektionsverfahren von Diskontinuitäten in einer Probe (3), wobei die Probe (3) eine Oberfläche (6) umfasst, die sich gemäß einer Referenzebene (X, Y) erstreckt, wobei das Verfahren die folgenden Stufen umfasst:
∘ (a) Erwerb einer Serie von Brechungsbildern der Oberfläche (6) der Probe (3), wobei jedes Brechungsbild per Beleuchtung der Oberfläche der Probe mit einem Partikelstrahl (2) realisiert ist, der geeignet ist, durch die Oberfläche der Probe gebrochen zu sein, wobei die Serie von Brechungsbildern per Verschiebung des Partikelstrahls relativ zu der Oberfläche der Probe gemäß einer Richtung X und gemäß einer Richtung Y realisiert ist, wobei jedes Brechungsbild durch die Koordinaten (Xₙ, Yₙ) des Partikelstrahls zum Zeitpunkt des Erwerbs des genannten Brechungsbildes identifiziert ist;
∘ (b) für jedes Brechungsbild Bestimmung einer Menge von Variationen der Gesamtintensität zwischen diesem Brechungsbild und jedem Brechungsbild, das diesem Brechungsbild anliegend ist; und **dadurch gekennzeichnet, dass** es die folgenden Schritte umfasst:
∘ (c) für jedes Brechungsbild Vergleich der Menge von Variationen der Gesamtintensität mit einer Schwellenmenge;
∘ für jedes Brechungsbild:
• Wenn die Menge von Variationen der Gesamtintensität höher ist als die Schwellenmenge wird davon ausgegangen, dass eine Diskontinuität an dem entsprechenden Brechungsbild vorhanden ist;
• Wenn die Menge von Variationen der Gesamtintensität niedriger ist als die Schwellenmenge, wird davon ausgegangen, dass keine Diskontinuität an dem entsprechenden Brechungsbild vorhanden ist.

2. Verfahren gemäß dem voranstehenden Anspruch, bei dem der Schritt (b) die folgenden Unterschritte umfasst:
∘ (d) Segmentierung jedes Brechungsbildes in Sektoren, wobei jeder Sektor durch Koordinaten (i, j) identifiziert ist, der seine Position in dem Brechungsbild anzeigt;
∘ (e) für jedes Brechungsbild die Bestimmung der Intensität des Brechungsbildes in jedem Sektor des Brechungsbildes;
∘ (f) für jeden Sektor (i, j) die Bestimmung einer Menge von Variationen der Intensität zwischen diesem Sektor und jedem Sektor, der dieselben Koordinaten (i, j) hat wie der genannte Sektor und zu Brechungsbildern gehört, die dem Brechungsbild anliegen, zu dem der genannte Sektor gehört;
∘ (g) für jedes Brechungsbild die Bestimmung der Menge von Variationen der Gesamtintensität durch Bildung der Summe der Mengen von Variationen der Intensität, die in Schritt (f) für jeden Sektor (i, j) bestimmt sind, der zu diesem Brechungsbild gehört.

3. Verfahren gemäß einem der voranstehenden Ansprüche, umfassend darüber hinaus einen Schritt (h) zur Bildung einer Darstellung der Oberfläche der Probe, wobei die Darstellung durch eine Gruppe von Pixeln gebildet wird, wobei jedes Pixel einem Brechungsbild entspricht, wobei jedes Pixel eine Intensität hat, die proportional zur Menge der Variation der Gesamtintensität ist, die für dieses Brechungsbild bestimmt wird.

4. Verfahren gemäß einem der voranstehenden Ansprüche, umfassend die folgenden Schritte:
∘ Segmentierung jedes Brechungsbildes in Sektoren, wobei jeder Sektor durch Koordinaten (i, j) identifiziert ist, der seine Position in dem Brechungsbild anzeigt;
∘ Für jeden Sektor (i, j) die Bestimmung einer zweiten Menge, die die Variation der Intensität in diesem Sektor (i, j) für alle Brechungsbilder darstellt.

5. Verfahren gemäß dem voranstehenden Anspruch, umfassend darüber hinaus einen Bildungsschritt eines Anti-Geräuschfilters (7), wobei der Anti-Geräuschfilter (7) eine jedem Sektor (i, j) zugeordnete Komponente umfasst, wobei jede Komponente als Wert die Variation der Intensität in diesem Sektor über alle Brechungsbilder hinweg aufweist.

6. Verfahren gemäß den Ansprüchen 3 und 5, bei dem der Anti-Geräuschfilter (7) ebenso viele Komponenten (8) umfasst wie die Darstellung Pixel umfasst, wobei jede Komponente des Anti-Geräuschfilters (8) einem Darstellungspixel zugeordnet ist, wobei das Verfahren darüber hinaus einen Multiplikationsschritt jedes Pixels mit dem Wert der entsprechenden Komponente umfasst.

7. Verfahren gemäß einem der voranstehenden Ansprüche, umfassend einen Detektionsschritt von kontinuierlichen Zonen zwischen den in dem Material detektierten Diskontinuitäten.

8. Verfahren gemäß einem der voranstehenden Ansprüche, bei dem die Richtung X und die Richtung Y lotrecht zueinander sind.

## Claims

1. A method for detecting discontinuities in a sample (3), the sample (3) including a surface (6) extending along a reference plane (X, Y), the method including the following steps of:
∘ (a) acquiring a series of diffraction images of the surface (6) of the sample (3), each diffraction image being made by illuminating the sample surface with a particle beam (2) able to be diffracted by the sample surface, the series of diffraction images being made by moving the particle beam relative to the sample surface along a direction X and along a direction Y, each diffraction image being identified by the coordinates (xₙ, yₙ) of the particle beam upon acquiring said diffraction image;
∘ (b) for each diffraction image, determining an amount of total intensity variations between this diffraction image and each of the diffraction images which are adjacent to this diffraction image;
and further **characterised in that** it includes the following steps of:
∘ (c) for each diffraction image, comparing the amount of total intensity variations with a threshold amount;
∘ for each diffraction image:
▪ if the amount of total intensity variations is higher than the threshold amount, it is considered that there is a discontinuity at the corresponding diffraction image;
▪ if the amount of total intensity variations is lower than the threshold amount, it is considered that there is no discontinuity at the corresponding diffraction image.

2. The method according to the preceding claim, wherein step (b) includes the following sub-steps of:
∘ (d) segmenting each diffraction image into sectors, each sector being identified by coordinates (i, j) indicating its position in the diffraction image;
∘ (e) for each diffraction image, determining the intensity of the diffraction image in each of the sectors of the diffraction image;
∘ (f) for each sector (i, j), determining an amount of intensity variations between this sector and each of the sectors having the same coordinates (i, j) as said sector and belonging to diffraction images adjacent to the diffraction image to which said sector belongs;
∘ (g) for each diffraction image, determining the amount of total intensity variation by summing the amounts of intensity variations determined during step (f) for each of the sectors (i, j) belonging to this diffraction image.

3. The method according to one of the preceding claims, further including a step (h) of forming a representation of the sample surface, the representation being formed by a set of pixels, each pixel corresponding to a diffraction image, each pixel having an intensity proportional to the amount of total intensity variation determined for this diffraction image.

4. The method according to one of the preceding claims, including the following steps of:
∘ segmenting each diffraction image into sectors, each sector being identified by coordinates (i, j) indicating its position in the diffraction image;
∘ for each sector (i, j), determining a second amount representing the intensity variation in this sector (i, j), on the set of the diffraction images.

5. The method according to the preceding claim, further including a step of forming an anti-noise filter (7), the anti-noise filter (7) including a component associated with each sector (i, j), each component having as a value, the intensity variation in this sector, on the set of the diffraction images.

6. The method according to claims 3 and 5, wherein the anti-noise filter (7) includes as many components (8) as the representation includes pixels, each component of the anti-noise filter (8) being associated with a pixel of the representation, the method further including a step of multiplying the value of each pixel by the value of the corresponding component.

7. The method according to one of the preceding claims, including a step of detecting continuous zones between the discontinuities detected in the material.

8. The method according to one of the preceding claims, wherein the direction X and direction Y are perpendicular to each other.
